# EUROPÄISCHE PATENTSCHRIFT

(11) **EP 1 991 804 B1**
(45) Veröffentlichungstag und Bekanntmachung des Hinweises auf die Patenterteilung: **02.12.2009**
(21) Anmeldenummer: 07701881.0
(22) Anmeldetag: 19.02.2007
(51) Int. Cl.: F16K 31/04

(54) **VERDREHSICHERUNG FÜR EINEN STELLMOTOR**
ANTI-TWIST DEVICE FOR AN ACTUATING MOTOR
SECURITE ANTI-TORSION POUR UN SERVOMOTEUR

(30) Priorität: 03.03.2006 CH 342062006
(43) Veröffentlichungstag der Anmeldung: 19.11.2008
(73) Patentinhaber: Belimo Holding AG, 8340 Hinwil (CH)
(72) Erfinder: LEHNERT, Frank, CH-8630 Rüti (CH); NIEDERHAUSER, Urs, CH-8422 Pfungen (CH)
(74) Vertreter: Roshardt, Werner Alfred
(86) Internationale Anmeldenummer: PCT/CH2007/000081
(87) Internationale Veröffentlichungsnummer: WO 2007/098620

(56) Entgegenhaltungen:
- DE-B- 1 286 363
- US-A- 3 318 171
- US-A- 5 927 682

## Beschreibung

Die Erfindung bezieht sich auf eine Anordnung wie im Oberteil des Anspruchs 1 gezeigt.

Eine Halterung für einen Stellmotor wurde bereits in US 3 318 171 offerbart.

Elektrische Stellantriebe für die Motorisierung von Stellgliedern in Heizungs-, Lüftungs- und Klimaanlagen, kurz HLK-Anlagen genannt, und Rauchgasrohren werden seit weit mehr als 30 Jahren hergestellt. HLK-Stellglieder gewährleisten eine wirtschaftliche Volumenstromregelung von Gasen und Flüssigkeiten, insbesondere von Luft und Wasser. Als kompakte Einheit umfassen Stellmotoren in der Regel nicht nur den Antrieb, sondern auch Druckfühler und Regler, alles in einem Gerät vereint.

Belüftungssysteme werden zunehmend in Gebäuden, insbesondere Wohn-, Büro-, Gewerbe- und Industriebauten, eingesetzt, in der Regel kombiniert mit Rauchgasschutzeinrichtungen. In Belüftungsanlagen spielt die Volumenstromregelung mit schwenkbaren Luftklappen eine wesentliche Rolle. Der Volumenstrom wird mit einem geeigneten Messinstrument gemessen, beispielsweise mit dem als kompakte Einheit von Antrieb, Druckfühler und Regler ausgebildeten NMV-D2M der Belimo Automation AG, CH-8340 Hinwil, und die Messwerte an eine Elektronik weitergeben.

Zum Schwenken einer Klappe betätigen verhältnismässig schwache Motoren grossflächige Regelorgane. Der Stellmotor muss am Verdrehen wegen des ausgeübten Drehmoments gehindert werden. Wird der Stellmotor mit einem Kraftschluss fest an der Klappenwelle montiert, muss ausser eines Drehmoments eine etwaige Exzentrität der rotierenden Klappenachse aufgenommen werden. Dies erfolgt mit einer Verdrehsicherung, welche eine entsprechende lineare Bewegung in Längsrichtung zulässt, jedoch ein Verdrehen des Stellmotors verhindert. Dazu kann in einem Abstand von der Antriebswelle der Absperrklappe ein Arretierdorn in einen einsitzseitig offenen Längsschlitz des Motorgehäuses geschoben werden. Der Arretierdorn ist in der Regel auf einem steifen, jedoch dem Rohrdurchmesser entsprechend biegbaren Lochband befestigt, das seinerseits mit dem Rohr verschraubt wird.

Wird der Antrieb mit einem Formschluss montiert, so muss der Stellmotor lediglich das Drehmoment, jedoch keine Exzentrizität aufnehmen, der Formschluss ist praktisch immer zentrisch zur Antriebswelle der Absperrklappe. Das Gehäuse des Stellmotors wird mit dem Rohr verschraubt und so die Verdrehsicherung hergestellt. Der Stellmotor wird überdies in Axialrichtung der Antriebswelle gesichert. Dazu muss jedoch genügend Platz zum Eindrehen der Schrauben geschaffen werden, bei runden Rohren müssen die Schrauben auf der gleichen Mantellinie liegen.

Der Erfindung liegt die Aufgabe zugrunde, eine Anordnung der eingangs genannten Art zu schaffen, welche einfacher zu montieren und flexibler zu handhaben ist.

Die Aufgabe wird erfindungsgemäss dadurch gelöst, dass in einem einstellbaren axialen Abstand von der Antriebswelle wenigstens eine den Stellmotor längsverschiebbar halternde Klammer angeordnet ist. Spezielle und weiterbildende Ausführungsformen der Verdrehsicherung sind Gegenstand von abhängigen Patentansprüchen.

Der Stellmotor wird bei der Montage gleichzeitig mit dem Aufschieben auf die Antriebswelle der Absperrklappe zwischen die Schenkel der zweckmässig U-förmig ausgebildeten Klammer geschoben und darin spielfrei gehaltert. Es ist jedoch von wesentlicher Bedeutung, dass der Stellmotor bezüglich der Radialrichtung der Antriebswelle frei verschiebbar ist. Dadurch kann eine allfällige

Exzentrizität ausgeglichen werden.

Die Klammer muss jedoch auch so stabil ausgebildet sein, dass sie das maximal mögliche Drehmoment des Anstellmotors problemlos aufnehmen kann. Bei der Herstellung eines üblichen Kraft- und/oder Formschlusses des Stellmotors mit der Antriebswelle, beispielsweise mittels eines üblichen Klemmbocks, ist die vorstehend beschriebene Halterung durch die Klammer hinreichend.

Vorzugsweise ist wenigstens ein Teil der parallelen Schenkel der Klammer federnd ausgebildet und weist je eine endständige, nach innen abkragende Verrastnase zur Niederhaltung des Stellmotors auf. Ein flacher Stellmotor wird von der Klammer umfasst, die Verrastnasen können auf der Oberseite des Gehäuses gleiten. Bei grösseren Stellmotoren ist im Gehäuse beidseits eine längslaufende Nut zur in Längsrichtung verschiebbaren Aufnahme der Verrastnasen ausgebildet.

Bei Schenkeln der Klammer, die durchgehend federnd ausgebildet sind, müssen diese trotzdem das maximale Drehmoment des Stellmotors aufnehmen können, müssen jedoch andererseits auch problemlos manuell spreizbar sein, damit der Stellmotor ohne Werkzeuge ausgewechselt werden kann.

Nach einer weiterbildenden Ausführungsform sind die Schenkel der Klammer in wenigstens einen federnden Teil mit Verrastnase und wenigstens einen formfest abgewinkelten Teil aufgetrennt. Der federnde Teil muss nun zur Aufnahme des Drehmoments keinen Beitrag mehr leisten. Zur besseren Handhabung kann er an der Basis eine Schwächungsnut aufweisen. Andrerseits kann im Bereich der formfesten Teile der Klammer eine sich einstückig über die Schenkel und die Basisplatte hinweg erstreckende Verstärkungsrippe ausgebildet sein.

Die Flexibilität der erfindungsgemässen Klammer wird weiter erhöht, wenn diese mit lediglich einer Schraube oder einem mechanisch äquivalenten Mittel, wie beispielsweise einem Niet, am Rohr befestigt und deshalb schwenkbar ist. Eine besonders interessante Variante dieser Lösung besteht darin, die Klammer über einen spreizbaren Clips mit sich gegenüberliegenden Schenkeln und nach aussen abkragenden Verrastnasen am Rohr zu befestigen, die zum Entrasten zusammengedrückt werden können. Bei einem Kunststoffspritzteil ist dieser Clip längsmittig angeformt.

Eine erfindungsgemässe Klammer erlaubt das rasche und problemlose Auswechseln eines Stellmotors. Die Montage kann weiter erleichtert werden, indem die Verrastnasen der Schenkel eine Gleitfläche aufweisen, welche beim Aufsetzen des Stellmotors die federnden Schenkel der Klammer automatisch spreizt und beim Erreichen der Endposition das Verrasten automatisch erfolgt.

Zweckmässig ist die Klammer vormontiert, so kann der Stellmotor nur noch eingeclipt werden.

Die Klammer kann aus allen geeigneten Materialien hergestellt werden, insbesondere Federstahl oder als Spritzgussteil aus Kunststoff.

Das Gastransportrohr kann auch mehrere Löcher zum Anbringen der Klammer aufweisen, welche entlang einer Mantellinie angeordnet sind. Dies erlaubt eine bezüglich des auftretenden Drehmoments optimale Positionierung der Klammer. Die nicht gebrauchten Löcher können mit geeigneten Mitteln abgedeckt werden.

Die erfindungsgemässe Klammer hat folgende Vorteile:
- Sie kann eine allfällige Exzentrizität aufnehmen.
- Es ist lediglich eine Schraube oder ein äquivalentes mechanisches Befestigungsmittel der Klammer am Rohr notwendig, beispielsweise ein Clip.
- Die Montage und Demontage des Stellmotors kann ohne Werkzeug erfolgen. Der Abstand der Antriebswelle der Absperrklappe zur Klammer ist in weiten Grenzen frei wählbar.
- Es sind keine aufwendigen Ausbuchtungen oder Anbauten am Antrieb notwendig.
- Der Stellmotor kann formschlüssig aufgesetzt werden, ohne dass eine Sicherung an der Antriebswelle notwendig ist.
- Eine einzige, d.h. die gleiche Halterung für Formschluss und Klemmbock genügt.

Die Erfindung wird anhand der in der Zeichnung dargestellten Ausführungsbeispiele, welche auch Gegenstand von abhängigen Patentansprüchen sind, näher erläutert. Es zeigen schematisch:
- Fig. 1 eine perspektivische Ansicht eines Stellmotors mit einer Verdrehsicherung nach dem Stand der Technik,
- Fig. 2 eine Ansicht eines Gastransportrohrs mit einer abkragenden Antriebswelle für eine Absperrklappe und einer vormontierten Klammer,
- Fig. 3 eine Ansicht gemäss Fig. 2 mit einem montagebereiten Stellmotor,
- Fig. 4 eine perspektivische Darstellung von Fig. 2,
- Fig. 5 eine Ansicht eines Gasrohrs mit montiertem Stellmotor,
- Fig. 6 eine perspektivische Darstellung von Fig. 5,
- Fig. 7 - 9 perspektivische Ansichten von Klammern, und
- Fig. 10 eine teilweise aufgeschnittene Ansicht einer Anordnung gemäss Fig. 5.

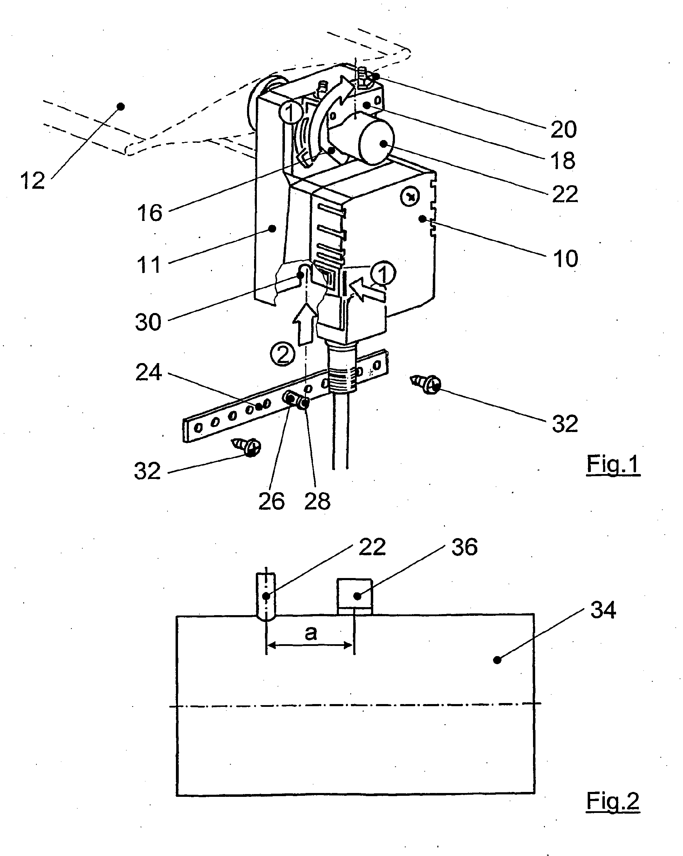

Fig. 1 zeigt einen Stellmotor 10 mit einem sehr starkem Untersetzungsgetriebe 11, mit welchem eine Absperrklappe 12 exakt um einen vorgegebenen Winkel schwenken kann. Das Drehmoment wird über einen Klemmbock 14, welcher einen im wesentlichen U-förmigen Bügel 16, ein Joch 18 und zwei Schrauben 20 umfasst, kraftschlüssig auf die Antriebswelle 22 überträgt.

Als Verdrehsicherung wird ein Lochband 24 mit einem Arretierdorn 26, welcher einen überstehenden Kopf 28 hat, in einen Schlitz 30 des Gehäuses eingeführt, was mit einem Pfeil ② dargestellt ist. Das steife Lochband 24 wird mittels zweier Schrauben 32 in einem nicht dargestellten Gastransportrohr (34 in Fig.2) verankert. Der in den Schlitz 30 eingeführte Arretierdorn 26 hat bei der Ausübung eines Drehmoments in Richtung des Pfeils ① praktisch kein Spiel. Hingegen kann eine durch den Kraftschluss verursachte Exzentrizität beim Drehen der Antriebswelle 22 jederzeit problemlos ausgeglichen werden.

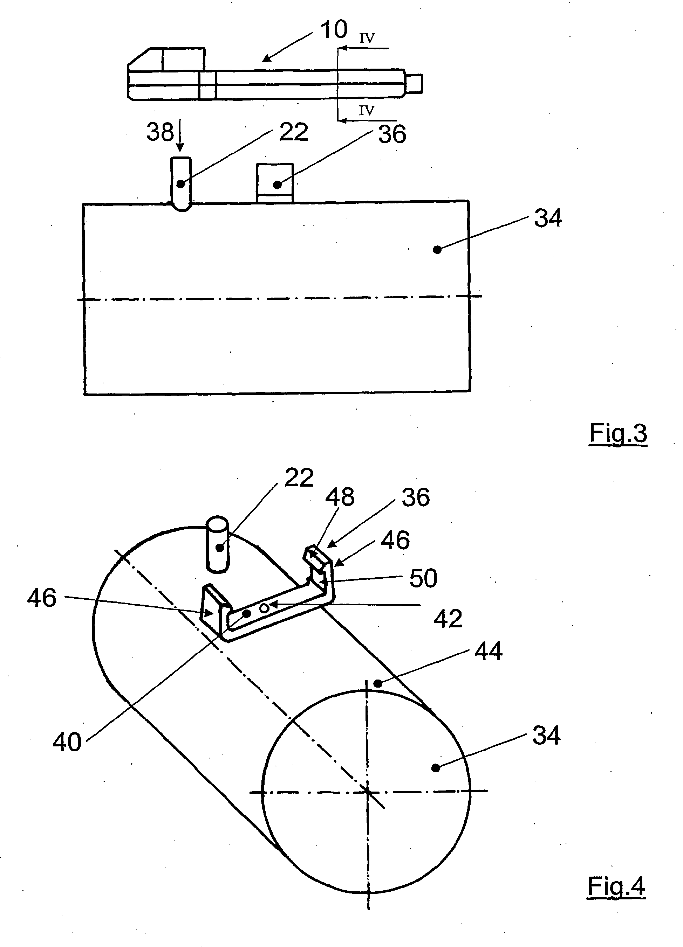

Fig. 2 zeigt ein Gastransportrohr 34 mit einer abkragenden Antriebswelle 22 der nicht sichtbaren Absperrklappe. Erfindungsgemäss ist eine hier vormontierte Klammer 36 schwenkbar gelagert. Ein flach ausgebildeter Stellmotor 10 wird gemäss Fig. 3 in Richtung des Pfeils 38 formschlüssig auf die abkragende Antriebswelle 22 gesteckt und gleichzeitig in die Klammer 36 eingeführt. Die Form der Klammer 36 ist aus Fig. 4 erkennbar. Sie ist im wesentlichen U-förmig ausgebildet und entspricht dem Querschnitt IV-IV des Stellmotors 10 in Fig. 3. Die Klammer 36 hat eine steife Basisplatte 40 mit einem eingemitteten Loch 42 für eine einzige Befestigungsschraube, welche einfachheitshalber nicht dargestellt ist. Das Loch 42 ist auf derselben Mantellinie 44 wie die Antriebswelle 22 ausgebohrt.

Die Klammer 36 gemäss Fig. 4 umfasst weiter zwei geringfügig aufspreizbare Schenkel 46 mit je einer Verrastnase 48. Weiter sind im unteren Bereich der Schenkel 46 Auflageleisten 50 für den aufgenommenen Stellmotor 10 ausgebildet. Aus Fig. 4 ist gut ersichtlich, dass der in der Klammer 36 gehalterte Stellmotor 10 in Axialrichtung des Gastransportrohrs 34 verschiebbar ist, was bei einer vorstehend diskutierten Variante mit dem Klemmbock 14 (Fig. 1) von wesentlicher Bedeutung ist.

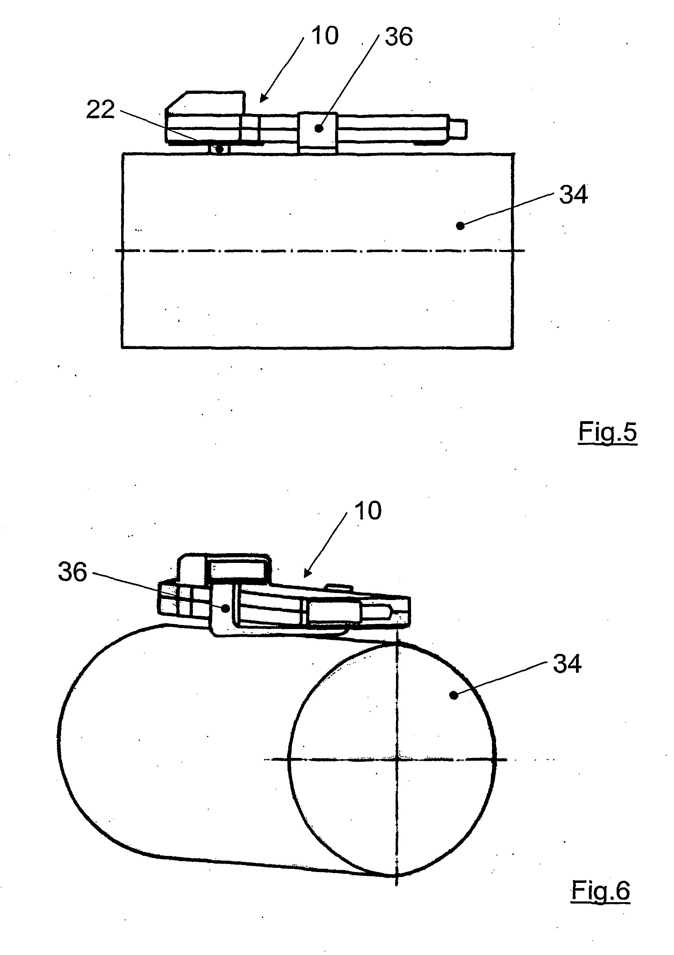

In Fig. 5 und 6 ist ein auf die Antriebswelle 22 gesteckter und in einer Klammer 36 gehalterter flacher Stellmotor 10 erkennbar.

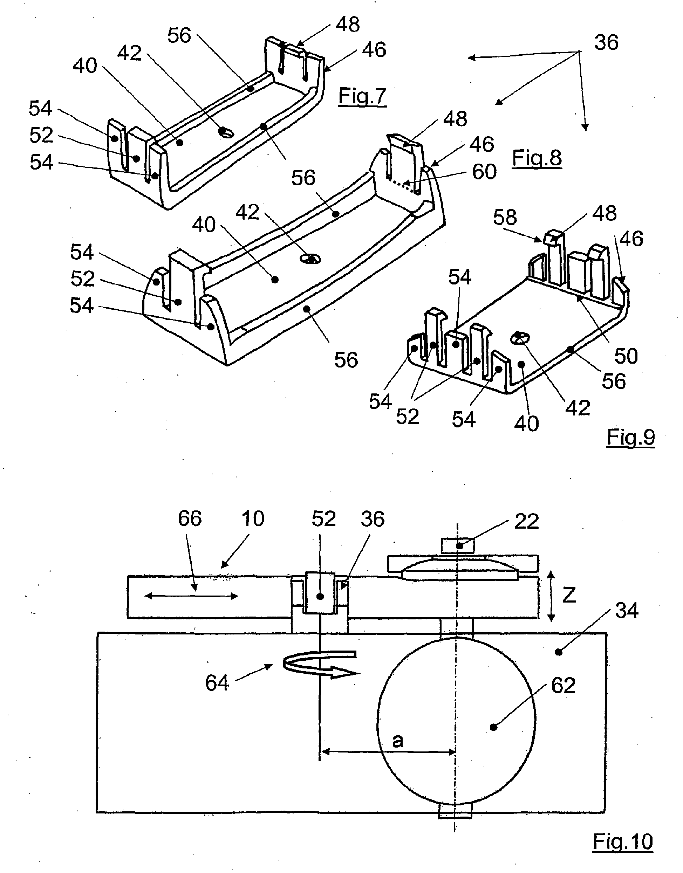

Fig. 7 bis 9 zeigen Klammern 36 mit unterschiedlich gegliederten Schenkeln 46. In Fig. 7 und 8 umfassen die Schenkel 46 einen federnden Mittelteil 52 mit der Verrastnase 48 und zwei seitliche formfest abgewinkelte Teile 54. Beidseits der Basisplatte 40 verlaufen Verstärkungsrippen 56 von Schenkel 46 zu Schenkel 46 bzw. von festem Teil 54 zu festem Teil 54 der Schenkel 46.

In der Ausführungsform der Klammer 36 gemäss Fig. 9 sind zwei längere federnde Teile 46 und drei kürzere formfeste Teile 54 als Schenkel 46 ausgebildet. Auf den Verrastnasen 48 der federnden Schenkel 52 ist eine nach innen - unten gerichtete Gleitfläche 58 ausgebildet. So kann der Stellmotor 10 auf die Verrastnasen 48 aufgesetzt und nach unten gedrückt werden. Dank der Gleitflächen 58 werden die federnden Teile 52 nach aussen gespreizt und schnappen beim Erreichen der Endposition auf den Auflageleisten 50 ein.

Die federnden Teile 52 gemäss Fig. 8 weisen an der Basis eine gestrichelt dargestellte Schwächungsnut 60 auf, dadurch ist die Verrastung besser lösbar.

In Fig. 10 ist nochmals ein Überblick über die Erfindung dargestellt. In einem Gastransportrohr 34 ist eine Absperrklappe 62 angeordnet, welche über eine Antriebswelle 22 schwenkbar ist.

Ein Stellmotor 10 wird über seine nicht erkennbare Antriebshohlwelle formschlüssig auf die Antriebswelle 22 der Absperrklappe 62 gesteckt und kann in der umgekehrten Richtung wieder entfernt werden, was mit dem Doppelpfeil z angedeutet ist. Beim Einfahren des Stellmotors 10 wird dieser ebenfalls in eine Klammer 36 gedrückt, wobei die federnden Teile 52 in der Endposition einschlappen und den Stellmotor 10 fixieren. Im Bereich der Antriebswelle 22 sind keine Fixierungsmassnahmen in z-Richtung zu treffen. Dies erfolgt durch das Verrasten der Klammer 36.

Mit dem Drehpfeil 64 ist angedeutet, dass die als Halterung dienende Klammer 36 drehbar ist, mit dem Doppelpfeil 66, dass der Stellmotor 10 in Längsrichtung des Gastransportrohrs 34 verschiebbar ist, wodurch eine Exzentrizität aufgefangen werden kann.

## Patentansprüche

1. Anordnung beinhaltend eine abkragende Antriebswelle (22) einer schwenkbaren Absperrklappe (62) eines Gastransportrohrs (34), insbesondere eines gebäudetechnischen HLK- oder Rauchgasrohrs, einen kraft- und/oder formschlüssig dar aufgesetzten Stellmotor (10) und eine Verdrehsicherung für den Stellmotor
**dadurch gekennzeichnet, dass**
in einem einstellbaren axialen Abstand (a) von der Antriebswelle (22) wenigstens eine den Stellmotor (10) längsverschiebbar halternde Klammer (36) angeordnet ist.

2. Anordnung nach Anspruch 1, **dadurch gekennzeichnet, dass** die parallelen Schenkel (46) der im wesentlichen U-förmigen Klammer (36) federnd ausgebildet sind, und je eine endständige, nach innen abkragende Verrastnase (48) zur Niederhaltung des Stellmotors (10) haben, welche diesen umfassen oder in eine längslaufende Nut von diesem eingreifen.

3. Anordnung nach Anspruch 1 oder 2, **dadurch gekennzeichnet, dass** die Schenkel (46) der Klammer (36) in wenigstens einen federnden Teil (52) mit Verrastnase (48) und wenigstens einem formfest abgewinkelten Teil (54) aufgetrennt sind.

4. Anordnung nach Anspruch 2 oder 3, **dadurch gekennzeichnet, dass** der federnde Teil (52) der Schenkel (46) an der Basis eine Schwächungsnut (60) aufweist.

5. Anordnung nach Anspruch 4, **dadurch gekennzeichnet, dass** die Klammer (36) wenigstens eine sich einstückig über die Schenkel (46) und die Basisplatte (40) hinweg erstreckende Verstärkungsrippe (56) umfasst.

6. Anordnung nach einem der Ansprüche 1 bis 5, **dadurch gekennzeichnet, dass** die Klammer (36) über ein längsmittiges Loch (42) mittels einer einzigen Schraube (32) oder eines Niets schwenkbar an einem Gastransportrohr (34) befestigt ist.

7. Anordnung nach Anspruch 6, **dadurch gekennzeichnet, dass** die Klammer (36) mittels eines längsmittig angeordneten Clipses mit sich gegenüber liegenden Schenkeln befestigt ist.

8. Anordnung nach einem der Ansprüche 1 bis 7, **dadurch gekennzeichnet, dass** die Klammer (36) vormontiert ist.

9. Anordnung nach einem der Ansprüche 1 bis 8, **dadurch gekennzeichnet, dass** die Verrastnasen (48) eine schräg nach innen und unten verlaufende Gleitfläche (58) zum automatischen Spreizen der Schenkel (46) der Klammer (36) beim Einführen des Stellmotors (10) haben.

10. Anordnung nach einem der Ansprüche 1 bis 9, **dadurch gekennzeichnet, dass** die Klammer (36) aus Federstahl oder aus einem elastischen Kunststoff besteht.

## Claims

1. Arrangement comprising a projecting drive shaft (22) of a pivotable shut-off flap (62) of a gas transportation pipe (34), in particular an HVAC or flue-gas pipe of a building, an actuating motor (10) which is fitted on the said drive shaft in a non-positive and/or positive manner, and an anti-twist device for the actuating motor
**characterized in that**
at least one clamp (36) which holds the actuating motor (10) such that it can move in the longitudinal direction is arranged at an adjustable axial distance (a) from the drive shaft (22).

2. Arrangement according to Claim 1, **characterized in that** the parallel limbs (46) of the substantially U-shaped clamp (36) are of sprung design and in each case have an inwardly projecting latching lug (48) at the end for holding down the actuating motor (10), which latching lugs surround said actuating motor or engage in a longitudinally running groove of said actuating motor.

3. Arrangement according to Claim 1 or 2, **characterized in that** the limbs (46) of the clamp (36) are separated into at least one sprung part (52) with a latching lug (48) and at least one dimensionally stable angled part (54).

4. Arrangement according to Claim 2 or 3, **characterized in that** the sprung part (52) of the limbs (46) has a weakening groove (60) at the base.

5. Arrangement according to Claim 4, **characterized in that** the clamp (36) comprises at least one reinforcing rib (56) which extends away over the limbs (46) and the base plate (40) in an integral manner.

6. Arrangement according to one of Claims 1 to 5, **characterized in that** the clamp (36) is fixed to a gas transportation pipe (34) such that it can pivot via a longitudinally central hole (42) by means of a single screw (32) or a rivet.

7. Arrangement according to Claim 6, **characterized in that** the clamp (36) is fixed by means of a clip which is arranged longitudinally in the centre and has opposing limbs.

8. Arrangement according to one of Claims 1 to 7, **characterized in that** the clamp (36) is premounted.

9. Arrangement according to one of Claims 1 to 8, **characterized in that** the latching lugs (48) have a sliding surface (58), which runs obliquely inward and downward, for automatically spreading the limbs (46) of the clamp (36) when the actuating motor (10) is inserted.

10. Arrangement according to one of Claims 1 to 9, **characterized in that** the clamp (36) comprises spring steel or an elastic plastic.

## Revendications

1. Arrangement comportant un arbre d'entraînement saillant (22) d'un clapet de fermeture pivotant (62) d'un tuyau de transport de gaz (34), en particulier d'un tube HVAC ou d'un tube de fumées dans la technique du bâtiment, un servomoteur (10) monté sur celui-ci en complémentarité de force et/ou de forme, et une sécurité anti-torsion pour le servomoteur, **caractérisé en ce qu'**au moins une attache (36) maintenant le servomoteur (10) de façon déplaçable en direction longitudinale est disposée à une distance axiale réglable (a) de l'arbre d'entraînement (22).

2. Arrangement selon la revendication 1, **caractérisé en ce que** les branches parallèles (46) de l'attache (36) essentiellement en forme de U sont élastiques, et présentent chacune à leur extrémité un ergot d'encliquetage (48) saillant vers l'intérieur destiné à maintenir le servomoteur (10), ergots qui entourent celui-ci ou qui s'engagent dans une rainure allongée de celui-ci.

3. Arrangement selon la revendication 1 ou 2, **caractérisé en ce que** les branches (46) de l'attache (36) sont divisées en au moins une partie élastique (52) avec l'ergot d'encliquetage (48) et au moins une partie coudée rigide (54).

4. Arrangement selon la revendication 2 ou 3, **caractérisé en ce que** la partie élastique (52) des branches (46) présente à la base une rainure d'affaiblissement (60).

5. Arrangement selon la revendication 4, **caractérisé en ce que** l'attache (36) comprend au moins une nervure de renforcement (56) s'étendant d'une pièce sur les branches (46) et la plaque de base (40).

6. Arrangement selon l'une quelconque des revendications 1 à 5, **caractérisé en ce que** l'attache (36) est fixée de manière pivotante sur un tuyau de transport de gaz (34) au moyen d'une seule vis (32) ou d'un rivet, à l'aide d'un trou (42) au milieu de sa longueur.

7. Arrangement selon la revendication 6, **caractérisé en ce que** l'attache (36) est fixée au moyen d'un clips disposé au milieu de sa longueur avec des branches opposées l'une à l'autre.

8. Arrangement selon l'une quelconque des revendications 1 à 7, **caractérisé en ce que** l'attache (36) est préassemblée.

9. Arrangement selon l'une quelconque des revendications 1 à 8, **caractérisé en ce que** les ergots d'encliquetage (48) présentent une face de glissement (58) orientée en oblique vers l'intérieur et vers le bas pour l'écartement automatique des branches (46) de l'attache (36) lors de l'insertion du servomoteur (10).

10. Arrangement selon l'une quelconque des revendications 1 à 9, **caractérisé en ce que** l'attache (36) se compose d'acier à ressort ou d'une matière synthétique élastique.
